(19) Europäisches Patentamt
European Patent Office
Office européen des brevets

(11) EP 2 796 895 B1

## (12) EUROPEAN PATENT SPECIFICATION

(45) Date of publication and mention
of the grant of the patent:
**05.08.2020 Bulletin 2020/32**

(51) Int Cl.:
***G01S 19/21*** *(2010.01)*

(21) Application number: **13290090.3**

(22) Date of filing: **23.04.2013**

(54) **DETECTING OF A SPOOFING JAMMER FOR GNSS SIGNALS**

DETEKTION EINES SPOOFING-STÖRSENDERS FÜR GNSS-SIGNALE

DÉTECTION DE MYSTIFICATION D'UN BROUILLEUR POUR SIGNAUX GNSS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.10.2014 Bulletin 2014/44**

(73) Proprietor: **Airbus Defence and Space GmbH
82024 Taufkirchen (DE)**

(72) Inventor: **Floch, Jean-Jacques
D-81677 München (DE)**

(74) Representative: **Frenkel, Matthias Alexander
Wuesthoff & Wuesthoff
Patentanwälte PartG mbB
Schweigerstrasse 2
81541 München (DE)**

(56) References cited:
**US-B1- 7 250 903**

• CUNTZ M ET AL: "Field Test: Jamming the DLR Adaptive Antenna Receiver", GNSS 2011 - PROCEEDINGS OF THE 24TH INTERNATIONAL TECHNICAL MEETING OF THE SATELLITE DIVISION OF THE INSTITUTE OF NAVIGATION (ION GNSS 2011), THE INSTITUTE OF NAVIGATION, 8551 RIXLEW LANE SUITE 360 MANASSAS, VA 20109, USA, 23 September 2011 (2011-09-23), page 384, XP056000789,

• AKOS ET AL: "Who?s Afraid of the Spoofer? GPS/GNSS Spoofing Detection via Automatic Gain Control", NAVIGATION, INSTITUTE OF NAVIGATION, FAIRFAX, VA, US, vol. 59, no. 4, 1 December 2012 (2012-12-01), pages 281-290, XP056000514, ISSN: 0028-1522

• MEURER MICHAEL ET AL: "Robust Joint Multi-Antenna Spoofing Detection and Attitude Estimation using Direction Assisted Multiple Hypotheses RAIM", GNSS 2012 - PROCEEDINGS OF THE 25TH INTERNATIONAL TECHNICAL MEETING OF THE SATELLITE DIVISION OF THE INSTITUTE OF NAVIGATION (ION GNSS 2012), THE INSTITUTE OF NAVIGATION, 8551 RIXLEW LANE SUITE 360 MANASSAS, VA 20109, USA, 21 September 2012 (2012-09-21), pages 3007-3016, XP056008583,

• CHANG A-C ET AL: "DOA Estimation Using Iterative MUSIC Algorithm for CDMA Signals", IEICE TRANSACTIONS ON COMMUNICATIONS, COMMUNICATIONS SOCIETY, TOKYO, JP, vol. E92B, no. 10, 1 October 2009 (2009-10-01), pages 3267-3269, XP001550809, ISSN: 0916-8516, DOI: 10.1587/TRANSCOM.E92.B.3267

**Description**

TECHNICAL FIELD

The invention relates to detecting of a spoofing jammer for GNSS signals.

BACKGROUND

Global Navigation Satellite System (GNSS) applications require that receivers are tracking authentic GNSS signals transmitted by the GNSS system (e.g Galileo, GPS). A GNSS signal sourced from a satellite space vehicle is very weak at the receiver's location and is therefore vulnerable to a hostile jammer.
One of the most dangerous jamming threats is a spoofing jammer where bogus signals are transmitted from the jammer that emulates identical GNSS signals. GNSS signals are therefore susceptible to spoofing attacks which can generate an unacceptable error on a GNSS position receiver.
In the publication S. Pullen, G. Gao, "GNSS Jamming in the Name of Privacy Potential Threat to GPS Aviation", available under the URL http://www.insidegnss.com, the threats of GNSS signal reception due to unintended or accidental radio interference, i.e. unintentional spoofing are discussed. The publication describes a recent incident in a German airport, where a "GNSS repeater" to check the functionality of GPS equipment on airplanes was set on such a high transmission power that transmission within a hangar leaked outside and interfered to GPS signals received.
The publication B. Ledvina, P. Montgomery, T. Humphreys "A Multi-Antenna Defense: Receiver-Autonomous GPS Spoofing Detection", available under the URL http://www.insidegnss.com, describes a methodology for detecting a spoofing attack on GNSS signals using a multiple antenna array.
The publication CUNTZ M ET AL: "Field Test: Jamming the DLR Adaptive Antenna Receiver", GNSS 2011 - PROCEEDINGS OF THE 24TH INTERNATIONAL TECHNICAL MEETING OF THE SATELLITE DIVISION OF THE INSTITUTE OF NAVIGATION (ION GNSS 2011), THE INSTITUTE OF NAVIGATION, 8551 RIXLEW LANE SUITE 360 MANASSAS, VA 20109, USA, 23 September 2011 (2011-09-23), page 384, XP056000789, describes the measurements that were taken and the results that were achieved by a multi-antenna real-time GPS/Galileo receiver platform, which was developed to demonstrate the performance gain of digital beamforming for GNSS receivers by the German Aerospace Center (DLR).
The publication AKOS ET AL: "Who's Afraid of the Spoofer? GPS/GNSS Spoofing Detection via Automatic Gain Control", NAVIGATION, INSTITUTE OF NAVIGATION, FAIRFAX, VA, US, vol. 59, no. 4, 1 December 2012 (2012-12-01), pages 281-290, XP056000514, ISSN: 0028-1522, outlines a monitor in the Radio Frequency (RF) front end of a GNSS signal receiver using the automatic gain control (AGC) mechanism.
US7250903B1 discloses a system and a method using a multi-element digital beamformer for detection and mitigation of spoofer and repeater threats to GPS that would not be addressed by baseline signal-to-noise (SNR) maximization algorithms. GPS correlators and processing are applied to multiple beam outputs to detect and locate spoofer and repeater threats. In the beamformer processing, detected threats can be spatially nulled, even in the presence of traditional high power jamming, by modifying the normal sample covariance matrix to introduce synthetic nulls. A digital complex weighting system multiples each input channel by a complex (gain/phase) weight and adds the weighted channels together to form beams that the GPS receiver can use to reacquire the satellites in use without knowledge of platform attitude or the antenna manifold.

SUMMARY OF INVENTION

The aim of this invention is to propose a method and a device for detecting of a spoofing jammer for GNSS signals. Particularly, the inventive method and device should be able to detect GNSS signals transmitted from spoofing jammers and to locate the spoofing jammers.
This object is achieved by the subject matter of the independent claims. Further embodiments are shown by the dependent claims.
An embodiment of the invention relates to a method for detecting a spoofing jammer for GNSS signals, wherein GNSS signals being available at a receiving position are known and the method comprises the following acts: receiving radio signals from a GNSS by means of an array antenna with N antenna elements and front end circuitry forming N receiver chains, each outputting digital data of the received radio signals, coarsely acquiring GNSS signals contained in the received radio signals by processing the outputted digital data with a receiver reference signal, determining a measure of the direction of arrival for each acquired GNSS signal by means of a steering vector evaluated for each elevation and azimuth in order to cover the hemisphere, and detecting a spoofing jammer from the determined measure of the direction of arrival (DOA). With the application of an antenna array and a steering vector for determining a measure of the direction of arrival of acquired GNSS signals, it is possible to determine GNSS signals from the same source and different direction of arrivals and, thus, to detect a spoofing jammer, which transmits GNSS signals from other positions than the GNSS satellites. The method further comprise the act of locating a spoofing jammer by determining the distance between the array antenna and the spoofing jammer from an acquired GNSS signal detected as being transmitted from the spoofing jammer by means of a code synchronization of the receiver reference signal with the acquired GNSS signal from the spoofing jammer.

The act of coarsely acquiring may comprise generating for each receiver chain n samples equivalent to the code length of the receiver reference signal multiplied with a receiver sampling frequency, generating a matrix M comprising for each receiver chain a row with the generated n samples of the respective receiver chain, generating a vector x of the receiver reference signal, and calculating a coarsely acquisition receiver matrix $R = \underline{x}^H M^t$, wherein $H$ denotes the Hermitian transpose and $t$ denotes the transpose.

The determining of a measure of the direction of arrival for each acquired GNSS signal may comprise calculating the measure $\Psi$ by multiplying the coarsely acquisition receiver matrix $R$ with the steering vector $A$.

The detecting of a spoofing jammer from the determined measure of the direction of arrival may comprise determining from the measure $\Psi$ the elevation and azimuth of each acquired GNSS signal, and detecting a spoofing jammer as source of an acquired GNSS signal by comparing the determined elevation and azimuth of the acquired GNSS signal with the Almanac of the GNSS satellite provided for transmitting the acquired GNSS signal.

The coarsely acquiring may be applied to the sum of In-Phase and Quadrature component data collected and summed from the digital data outputted by all N receiver chains. Alternatively, the coarsely acquiring may be directly applied to the digital data outputted from at least two receiver chains.

The GNSS signals being available at the receiving position may be obtained via Almanac and/or Ephemeris data.

The method may be processed either in parallel or sequential for detecting and locating several spoofing jammers.

A further embodiment of the invention relates to a computer program, which implements the method according to the invention and as described herein and enabling detecting of a spoofing jammer according to the invention when executed by a computer. Such a computer program could be used by a computer equipped with a GNSS receiver comprising an array antenna for receiving GNSS radio signals, enabling the computer to efficiently detect spoofing jammers.

According to a further embodiment of the invention, a record carrier storing a computer program according to the invention may be provided, for example a CD-ROM, a DVD, a memory card, a diskette, or a similar data carrier suitable to store the computer program for electronic access.

A yet further embodiment of the invention relates to a device for detecting a spoofing jammer for GNSS signals, wherein GNSS signals being available at a receiving position are known and the device comprises first means for receiving radio signals from a GNSS and outputting digital data of the received radio signals, and second means for coarsely acquiring GNSS signals contained in the received radio signals by processing the outputted digital data with a receiver reference signal, for determining a measure of the direction of arrival for each acquired GNSS signal by means of a steering vector evaluated for each elevation and azimuth in order to cover the hemisphere, and for detecting a spoofing jammer from the determined measure of the direction of arrival.

The first means may comprise an array antenna with N antenna elements and front end circuitry comprising RF front end circuitry for down converting received radio signals in a baseband and digital front end circuitry for digitizing of the down converted received radio signals, wherein the front end circuitry and the array antenna form N receiver chains.

The second means may comprise one or more processing means being configured to perform the method acts of the invention and as described above. The processing means may be for example a standard processor configured by a computer program implementing the method of the invention and as described herein. The processing means may also be implemented in hardware for example by means of ASICs (Application Specific Integrated Circuits) or (F)PGAs ((Field) Programable Gate Arrays).

The second means may comprise a matrix processor for performing the method acts of generating for each receiver chain n samples equivalent to the code length of the receiver reference signal multiplied with a receiver sampling frequency, generating a matrix $M$ comprising for each receiver chain a row with the generated n samples of the respective receiver chain, generating a vector $\underline{x}$ of the receiver reference signal, and calculating a coarsely acquisition receiver matrix $R = \underline{x}^H M^t$, wherein $H$ denotes the Hermitian transpose and $t$ denotes the transpose, a spoofer direction of arrival determination processor for performing the acts of calculating the measure $\Psi$ by multiplying the coarsely acquisition receiver matrix $R$ with the steering vector A, determining from the measure $\Psi$ the elevation and azimuth of each acquired GNSS signal, and detecting a spoofing jammer as source of an acquired GNSS signal by comparing the determined elevation and azimuth of the acquired GNSS signal with the Almanac of the GNSS satellite normally transmitting the acquired GNSS signal.

These and other aspects of the invention will be apparent from and elucidated with reference to the embodiments described hereinafter.

The invention will be described in more detail hereinafter with reference to exemplary embodiments. However, the invention is not limited to these exemplary embodiments.

BRIEF DESCRIPTION OF DRAWINGS

Fig. 1 shows a first embodiment of a spoofing jammer detection architecture with an array antenna, a RF and digital front end, and a coarse acquisition module for application of a coarse acquisition to the sum of In-Phase and Quadrature component data collected and summed from the digital data outputted by all N receiver chains according to the invention;

Fig. 2 shows a second embodiment of a spoofing jammer detection architecture with an array antenna, a RF and digital front end, and a coarse acquisition module for a direct application of a coarse acquisition to the digital data outputted from two receiver chains according to the invention;

Figs. 3 and 4 show diagrams of the acquisition applied to chain (k and i) of the architecture shown in Fig. 2 for a signal of 4 ms code length with a spoofer transmitting with an elevation of 60 degree and 220 azimuth and the correct GNSS satellite with an elevation of 30 degree and an azimuth of 45 degree;

Fig. 5 shows a third embodiment of a spoofing jammer detection architecture with an array antenna, a RF and digital front end, and a spoofer DOA module according to the invention;

Fig. 6 shows in a diagram the figure of merit for the Spoofer DOA for the architecture of Fig. 5; and

Fig. 7 shows a diagram with a second synchronised signal being transmitted from 30 degree elevation and 45 degree azimuth.

DESCRIPTION OF EMBODIMENTS

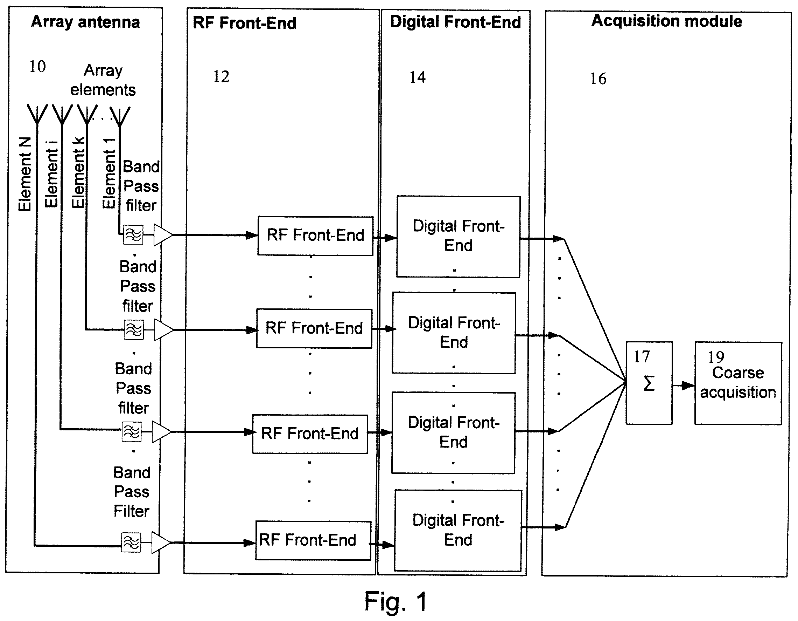

In the following, functionally similar or identical elements may have the same reference numerals. Absolute values are shown below by way of example only and should not be construed as limiting the invention.
The invention principially proposes a receiver/detector architecture to detect the presence of potential spoofing attacks on a GNSS via acquisition, and then to detect the direction of arrival of a spoofing signal in order to locate it. In order to accomplish this task, a list of available GNSS signals on the receiving location, i.e. on site has to be known. A list of the available GNSS signals can for example be obtained via Almanac or Ephemeris data. Almanac data contains course orbital parameters from all GNSS navigation satellites. Almanac data is not very precise and can be several months old. On the contrary, Ephemeris data is very precise because of the fact that it uses clock correction technology. For precise navigation information, Ephemeris data is used by global positioning systems. For GPS, it only stays valid for approximately 30 minutes and it is broadcasted by satellites every 30 seconds.
In the following description, the spoofing of only one GNSS signal transmitter T (GNSS satellite) is considered. However, in order to consider a spoofing of all GNSS signal transmitters (GNSS satellites) defined in the list with GNSS signals available at the receiver location, the same method can be processed either in parallel or sequentially.
With the following described first inventive architecture shown in Fig. 1, a coarse acquisition will be applied to the sum of the In-Phase and Quadrature data collected from N receiver chains which allows synchronising (Code/Doppler) a receiver reference signal with the incoming authentic and the not desired GNSS signals.
Fig. 1 shows a first architecture according to the invention with an array antenna 10 with N array elements 1 ... N. Each array element comprises a band pass filter for filtering the frequency range of interest of the received radio signals. The received and band pass filtered radio signals are passed to a RF (Radio Frequency) front end unit 12 comprising a RF front end circuitry for each array element of the array antenna 10. The RF front end circuitries down convert received and the band pass filtered signals into a baseband frequency range for further processing. The down converted signals are then transmitted from the RF front end 12 to a digital front end unit 14 comprising digital front end circuitries for each array element of the array antenna 10. The digital front end circuitries sample the analogue down converted signals received from the RF front end unit 12. The digital front end unit 14 outputs the sampled signals as digital data of the received, band pass filterred, and down converted radio signals.
The array antenna 10 and the front end units 12 and 14 form N receiver chains. As described above, each receiver chain 1 ... N outputs digital data of the baseband filtered and down converted radio signal received via the respective array element. The digital data outputted by the digital front end 14 are further processed in an acquisition module or unit 16. The acquisition unit 16 of the arcitecture shown in Fig. 1 comprises a summer 17 for summing the digital data outputted by each of the N receiver chains. The digital data output of the summer 17 is fed to a coarse acquisition unit 19, which coarsely acquires a GNSS signal, i.e. a signal transmitted by a certain GNSS satellite, contained in the received radio signals by performing a correlation of the output signal of the summer 17 with a receiver reference signal or the acquisition code of a receiver assigned to the GNSS signal to acquire.

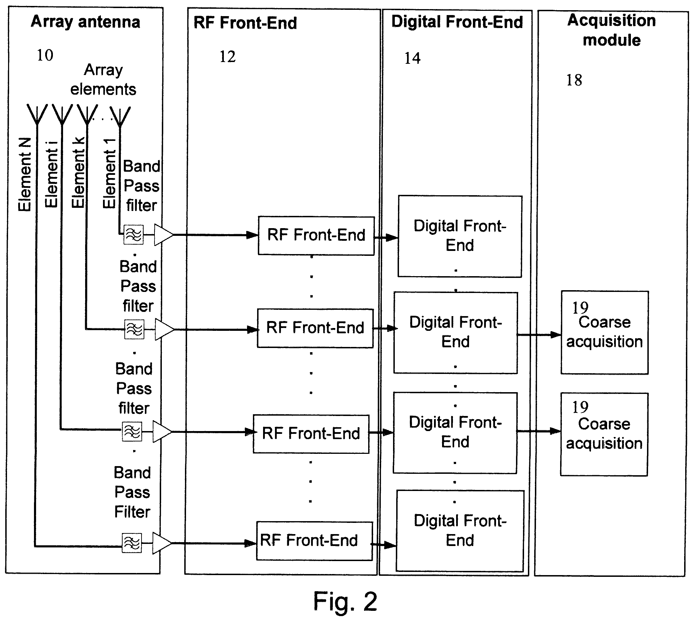

With the following described second inventive architecture shown in Fig. 2, an acquisition is directly applied on at least two receiver chains in order to synchronize the receiver reference signal with the incoming authentic and the not desired GNSS signals.

Fig. 2 shows a similar second architecture of the invention, which differs from the first architecture shown in Fig. 1 in the acquisition unit 18. The unit 18 of the architecture from Fig. 2 comprises instead of a summer 17 and one coarse acquisition unit 19 two coarse acquisition units 19, which are directly fed with the outputted digital data of two different receiver chains. Thus, a GNSS signal from a certain GNSS satellite is directly acquired from the outputted digital data of the selected two receiver chains by means a receiver reference signal or the acquisition code of a receiver. It should be noted that the GNSS signal should be acquired from the outputted digital data of at least two receiver chains and the minimum number of acquisitions depends on the geometry of the array antenna used to cover the full hemisphere. For instance, for a sphere antenna, four acquisitions coming from four antenna elements correctly selected would be required, i.e. the outputted digital data from four receiver chains should be processed for signal acquisition in order to achieve good results in spoofing jammer detection.

With the above described architectures, all the GNSS signals identical to the one transmitted by T can be acquired.

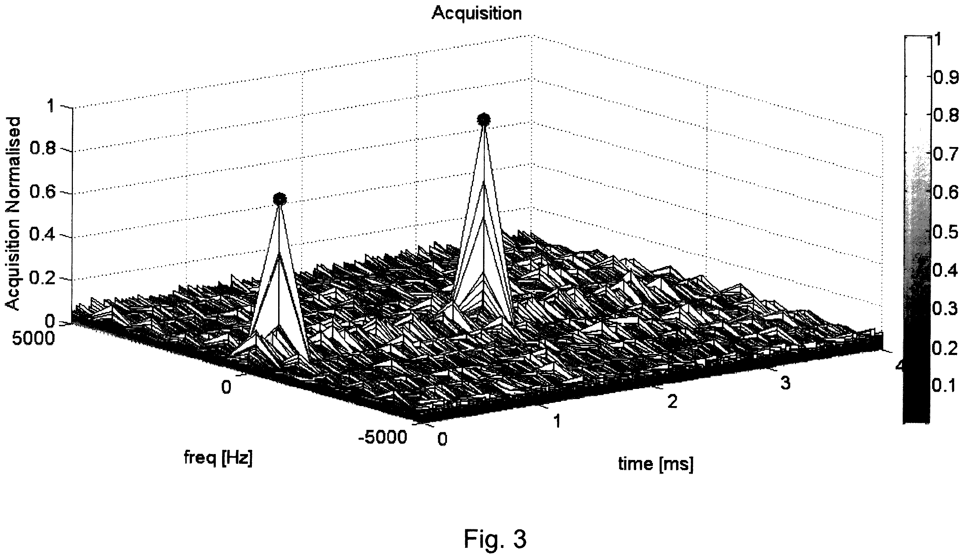

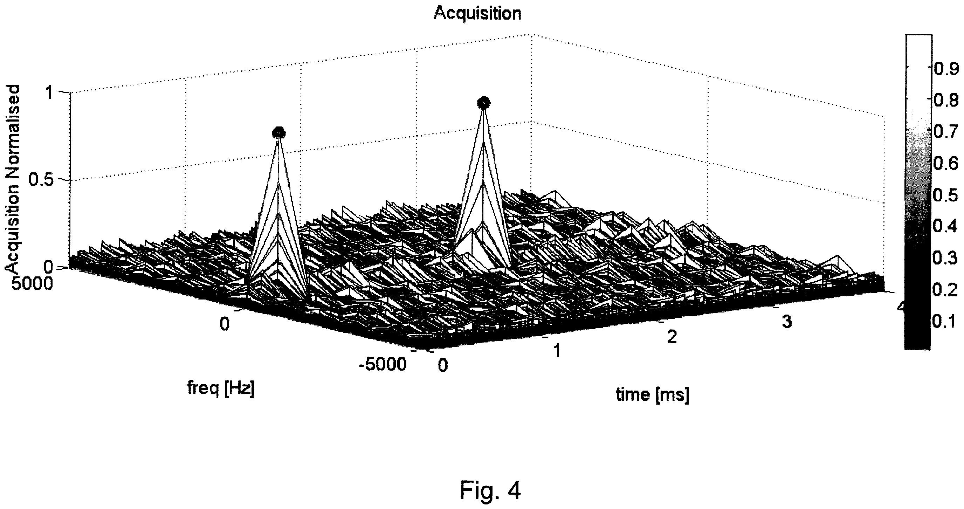

As an example, Figs. 3 and 4 presents diagrams of the acquisition applied to chain (k and i) of the architecture from Fig. 2 for a signal of 4 ms code length with a spoofing jammer transmitting a spoofed GNSS signal with an elevation of 60 degree and 220 azimuth and the correct GNSS satellite (transmitter T) transmitting the authentic GNSS signal with an elevation of 30 degree elevation and 45 degree azimuth. The two peaks show the presence of the authentic GNSS signal coming from transmitter T as well as one identical GNSS (spoofed) signal coming from the spoofing jammer.

In order to locate the spoofing jammer, the following operation according to the invention can now be applied.

First, a matrix M is generated, which is the matrix of n samples equivalent to the code length* receiver sampling frequency (code length 4 ms and receiver sampling frequency 20MHz => n=80000 samples) over the N receiver chains:

$$M = \frac{1}{N_{samples}} \begin{bmatrix} x_{11} & x_{12} & . & . & x_{1n} \\ x_{21} & x_{22} & . & . & x_{2n} \\ . & . & . & . & . \\ x_{N1} & x_{N2} & . & . & x_{Nn} \end{bmatrix}$$

Each row of the matrix M contains the samples of one receiver chain (first index), and each column of the matrix M contains one of the n samples (second index).

Second, a vector x of the receiver reference signal (spreading codes modulated with the signal pulse shape) is generated:

$$\underline{x} = \begin{bmatrix} x_1 \\ x_2 \\ . \\ . \\ . \\ x_n \end{bmatrix}$$

Third, after the coarse acquisition, the samples of all the receiver chains and the sample of the receiver reference signal are synchronized with the first acquire signal. For performing this task, the following operations will be performed: $R = \underline{x}^H M^t$, wherein $^H$ denotes Hermitian transpose and $^t$ denotes the transpose.

Fourth, the figure of merit to find the DOA of the signal transmitter is defined as:

$$\psi = R \cdot A$$

where A is the steering vector evaluated for each elevation $(\theta = 0 : \frac{\pi}{2})$ and each azimuth ($\Phi = 0{:}2\pi$) in order cover all of the hemisphere.

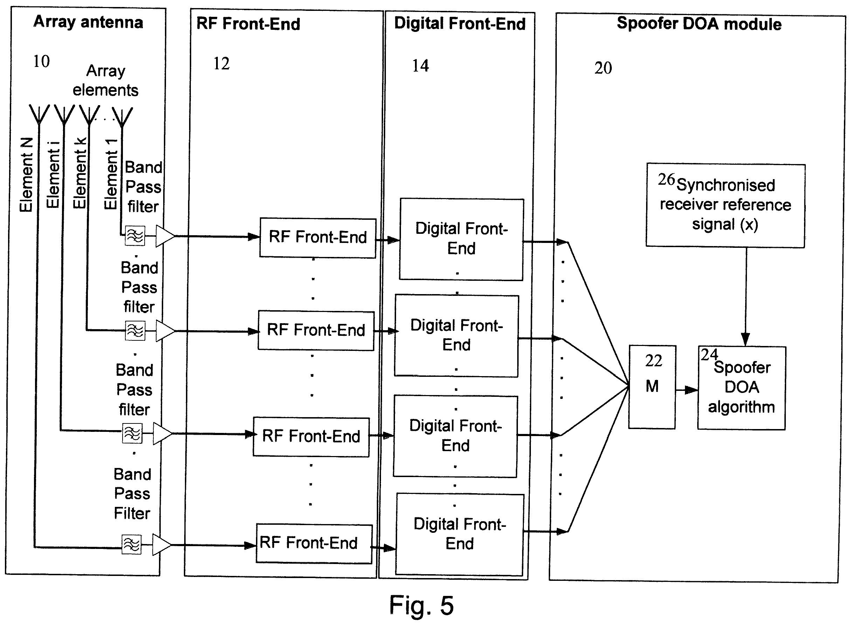

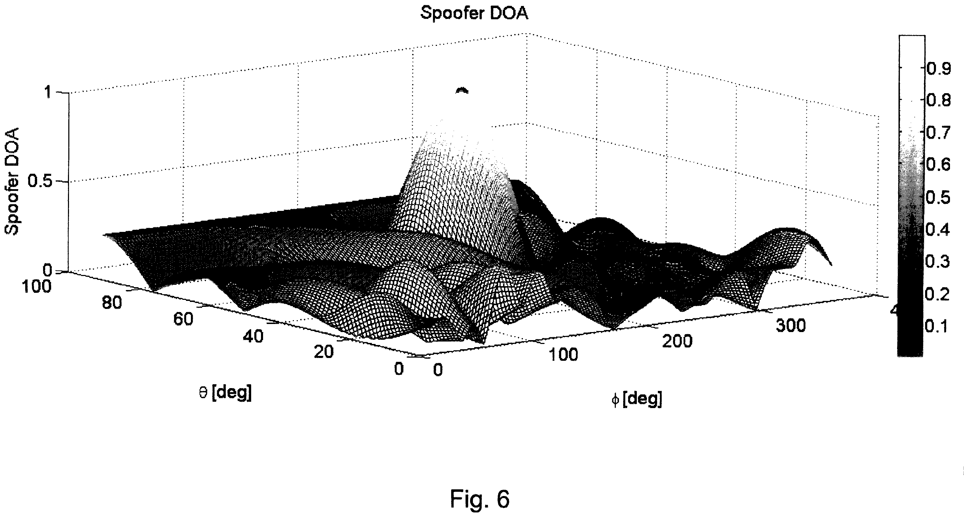

The receiver/detector architecture to apply this algorithm is shown in Fig. 5 and the figure of merit for the Spoofer DOA is shown in Fig. 6.

The architecture shown in Fig. 5 comprises a Spoofer DOA module 20 for executing the above described algorithm. The matrix M is generated by a matrix processor 22, which receives the digital data outputted from the digital front end circuitry 14, i.e. for each of the N receiver chains n samples. The generated matrix M is passed to a Spoofer DOA algorithm processor 24, which also receives the vector x of the receiver reference signal from a generator 26 for the synchronized receiver reference signal. Processor 24 then performs the operations $R = \underline{x}^H M^t$ and $\Psi = R \cdot A$ in order to determine a DOA measure for the acquired GNSS signal from transmitter T. The algorithm is re4peated depending on the number of acquired GNSS signals. For example, if two GNSS signals are acquired as shown in Figs. 3 and 4, the algorithm is repeated two times.

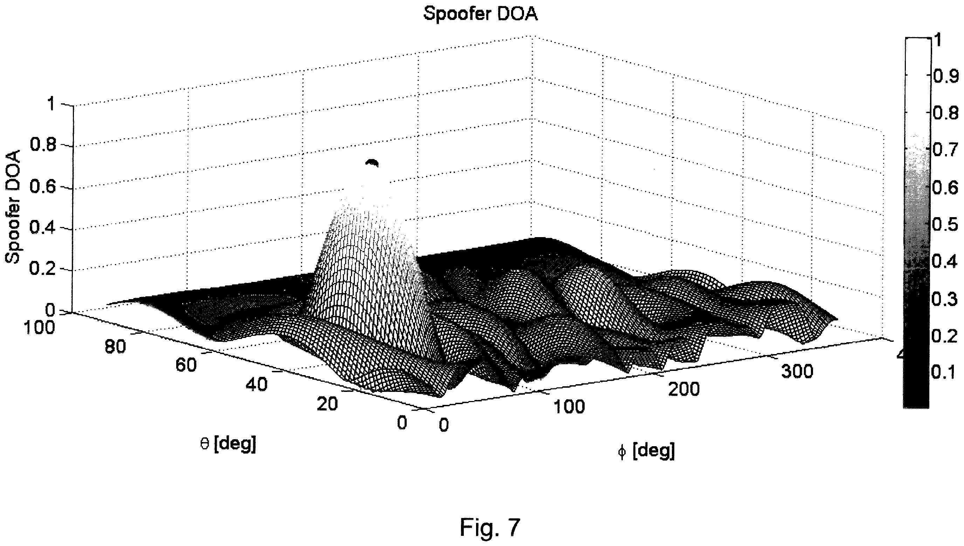

Examples of the results of the algorithm for spoofing jammer detection are shown in Figs. 6 and 7. According to Fig. 6, a first synchronised GNSS signal is transmitted from 60 degree elevation and 220 degree azimuth. Fig. 7 shows that a second synchronised GNSS signal is transmitted from 30 degree elevation and 45 degree azimuth. In order to recognize which signal is transmitted by the spoofing jammer and which one is transmitted by the correct GNss satellite, the determined measures of DOA for both acquired GNSS signals can be compated with the Almanac and/or Ephemerides of the authentic GNSS signal transmitted from the respective GNSS satellite.

The location of the spoofing jammer can be for example determined from the distance between a spoofing jammer detector receiver and the spoofer (code synchronisation) and the DOA.

This invention allows using antenna array techniques to locate potential spoofing jammers "Spoofers", even if their signal level is below. The architectures proposed by the invention allow protecting some sensitive areas (e.g airports) from spoolers. As soon as they are located, actions can be taken to remove them, and action can also be taken to inform GNSS users on the monitored area.

REFERENCE NUMERALS

| 10 | Array antenna with N array elements |
| 12 | RF front end circuitry |
| 14 | Digital front end circuitry |
| 16 | Acquisition module/unit |
| 17 | Summer |
| 18 | Acquisition module/unit |
| 19 | Coarse acquisition unit |
| 20 | Spoofer DOA module/unit |
| 22 | Matrix processor |
| 24 | Spoofer DOA algorithm processor |
| 26 | Synchronized receiver reference signal generator |

**Claims**

1. A method for detecting a spoofing jammer for GNSS signals, wherein GNSS signals being available at a receiving position are known and the method comprises the following acts:

- receiving radio signals from a GNSS by means of an array antenna (10) with N antenna elements and front end circuitry (12, 14) forming N receiver chains, each outputting digital data of the received radio signals,
- coarsely acquiring (16, 18) GNSS signals contained in the received radio signals by processing the outputted digital data with a receiver reference signal,
- determining (20, 22, 24, 26) a measure of the direction of arrival for each acquired GNSS signal by means of a steering vector evaluated for each elevation and azimuth in order to cover the hemisphere,

- detecting (20, 22, 24, 26) a spoofing jammer from the determined measure of the direction of arrival, and **characterised in** the further step of
- locating a spoofing jammer by determining the distance between the array antenna and the spoofing jammer from an acquired GNSS signal detected as being transmitted from the spoofing jammer by means of a code synchronization of the receiver reference signal with the acquired GNSS signal from the spoofing jammer.

2. The method of claim 1, wherein the coarsely acquiring comprises

- generating for each receiver chain n samples equivalent to the code length of the receiver reference signal multiplied with a receiver sampling frequency,
- generating a matrix $M$ comprising for each receiver chain a row with the generated n samples of the respective receiver chain,
- generating a vector $\underline{x}$ of the receiver reference signal,
- calculating a coarsely acquisition receiver matrix $R = \underline{x}^H M^t$, wherein $H$ denotes the Hermitian transpose and $t$ denotes the transpose.

3. The method of claim 2, wherein the determining of a measure of the direction of arrival for each acquired GNSS signal comprises calculating the measure $\Psi$ by multiplying the coarsely acquisition receiver matrix $R$ with the steering vector A.

4. The method of claim 3, wherein the detecting of a spoofing jammer from the determined measure of the direction of arrival comprises

- determining from the measure $\Psi$ the elevation and azimuth of each acquired GNSS signal, and
- detecting a spoofing jammer as source of an acquired GNSS signal by comparing the determined elevation and azimuth of the acquired GNSS signal with the Almanac of the GNSS satellite provided for transmitting the acquired GNSS signal.

5. The method of any of the preceding claims, wherein the coarsely acquiring is applied to the sum of In-Phase and Quadrature component data collected and summed from the digital data outputted by all N receiver chains.

6. The method of any of the preceding claims, wherein the coarsely acquiring is directly applied to the digital data outputted from at least two receiver chains.

7. The method of any of the preceding claims, wherein the GNSS signals being available at the receiving position are obtained via Almanac and/or Ephemeris data.

8. The method of any of the preceding claims, being processed either in parallel or sequential for detecting and locating several spoofing jammers.

9. A device for detecting a spoofing jammer for GNSS signals, wherein GNSS signals being available at a receiving position are known and the device comprises

- first means (10, 12, 14) adapted to receive radio signals from a GNSS and output digital data of the received radio signals, and
- second means (16, 18, 20) adapted to coarsely acquire GNSS signals contained in the received radio signals by processing the outputted digital data with a receiver reference signal, adapted to determine a measure of the direction of arrival for each acquired GNSS signal by means of a steering vector evaluated for each elevation and azimuth in order to cover the hemisphere, and adapted to detect a spoofing jammer from the determined measure of the direction of arrival, and **characterised by** being further adapted to locate a spoofing jammer by determining the distance between the array antenna and the spoofing jammer from an acquired GNSS signal detected as being transmitted from the spoofing jammer by means of a code synchronization of the receiver reference signal with the acquired GNSS signal from the spoofing jammer.

10. The device of claim 9, wherein the first means comprise

- an array antenna (10) with N antenna elements and
- front end circuitry comprising RF front end circuitry (12) for down converting received radio signals in a baseband and digital front end circuitry (14) for digitizing of the down converted received radio signals, wherein the front end circuitry (12, 14) and the array antenna (10) form N receiver chains.

**11.** The device of claim 10, wherein the second means (16, 18, 20) comprise one or more processing means being configured to perform the method acts of claim 2, 3, and/or 4.

**12.** The device of claim 11, wherein the second means (16, 18, 20) comprise

- a matrix processor for performing the method acts of claim 2,
- a spoofer direction of arrival determination processor for performing the acts of claims 3 and 4.

**13.** A computer program, which when carried out on a processor of any of the devices of claims 9-11, causes the devices to carry out the corresponding methods of claims 1-8.

**14.** A recording carrier storing the computer program of claim 13.

**Patentansprüche**

**1.** Verfahren zum Erkennen eines Spoofing-Jammers für GNSS-Signale, wobei GNSS-Signale, die an einer Empfangsposition verfügbar sind, bekannt sind und das Verfahren die folgenden Handlungen umfasst:

- Empfangen von Funksignalen von einem GNSS mittels einer Gruppenantenne (10) mit N Antennenelementen und einer Front-End-Schaltung (12, 14), die N Empfängerketten bilden, von denen jede digitale Daten der empfangenen Funksignale ausgibt,
- Groberfassung (16, 18) der in den empfangenen Funksignalen enthaltenen GNSS-Signale durch Verarbeitung der ausgegebenen digitalen Daten mit einem Empfänger-Referenzsignal,
- Bestimmen (20, 22, 24, 26) einer Messung für die Ankunftsrichtung für jedes erfasste GNSS-Signal mit Hilfe eines Lenkungsvektors, der für jede Elevation und jeden Azimut ausgewertet wird, um die Hemisphäre abzudecken,
- Erkennen (20, 22, 24, 26) eines Spoofing-Störers aus der ermittelten Messung der Ankunftsrichtung, und **gekennzeichnet durch** den weiteren Schritt
- Lokalisieren eines Spoofing-Störers durch Bestimmen der Entfernung zwischen der Gruppenantenne und dem Spoofing-Störer aus einem erfassten GNSS-Signal, das als von dem Spoofing-Störer übertragen erkannt wurde, mittels einer Codesynchronisation des Empfänger-Referenzsignals mit dem erfassten GNSS-Signal von dem Spoofing-Störer.

**2.** Verfahren nach Anspruch 1, wobei die Groberfassung umfasst

- Erzeugen, für jede Empfängerkette, von n Abtastwerten, die der Codelänge des Empfänger-Referenzsignals multipliziert mit einer Empfänger-Abtastfrequenz, entsprechen,
- Erzeugen einer Matrix $M$, die für jede Empfängerkette eine Zeile mit den erzeugten n Abtastwerten der jeweiligen Empfängerkette enthält,
- Erzeugen eines Vektors $\underline{x}$ des Empfänger-Referenzsignals,
- Berechnen einer Groberfassungs-Empfängermatrix $R = \underline{x}^H M^t$, wobei $^H$ die Hermitesche Transponierung und $^t$ die Transponierung bezeichnet.

**3.** Verfahren nach Anspruch 2, wobei das Bestimmen einer Messung für die Ankunftsrichtung für jedes erfasste GNSS-Signal die Berechnung der Messung $\Psi$ durch Multiplikation der Groberfassungs-Empfängermatrix $R$ mit dem Lenkungsvektor A umfasst.

**4.** Verfahren nach Anspruch 3, wobei das Feststellen eines Spoofing-Störers aus der ermittelten Messung der Ankunftsrichtung umfasst

- Bestimmen, aus der Messung $\Psi$, der Elevation und des Azimuts von jedem erfassten GNSS-Signal, und
- Erkennen eines Spoofing-Jammers als Quelle eines erfassten GNSS-Signals durch Vergleichen der ermittelten Elevation und des Azimuts des erfassten GNSS-Signals mit dem Almanach des GNSS-Satelliten, der für die Übertragung des erfassten GNSS-Signals vorgesehen ist.

**5.** Verfahren nach einem der vorhergehenden Ansprüche, wobei die Groberfassung auf die Summe der In-Phase- und Quadratur-Komponentendaten angewendet wird, die aus den von allen N Empfängerketten ausgegebenen digitalen Daten gesammelt und summiert werden.

**6.** Verfahren nach einem der vorstehenden Ansprüche, wobei die Groberfassung direkt auf die von mindestens zwei Empfängerketten ausgegebenen digitalen Daten angewendet wird.

**7.** Verfahren nach einem der vorstehenden Ansprüche, wobei die an der Empfangsposition verfügbaren GNSS-Signale über Almanach- und/oder Ephemeriden-Daten gewonnen werden.

**8.** Verfahren nach einem der vorhergehenden Ansprüche, wobei entweder parallel oder sequentiell verarbeitet wird, um mehrere Spoofing-Störsender zu erkennen und zu lokalisieren.

**9.** Vorrichtung zum Erkennen eines Spoofing-Jammers für GNSS-Signale, wobei GNSS-Signale, die an einer Empfangsposition verfügbar sind, bekannt sind und die Vorrichtung umfasst

- erste Mittel (10, 12, 14) ausgebildet zum Empfang von Funksignalen von einem GNSS und zur Ausgabe von digitalen Daten der empfangenen Funksignale, und
- zweite Mittel (16, 18, 20) ausgebildet zut Groberfassung von in den empfangenen Funksignalen enthaltenen GNSS-Signalen durch Verarbeitung der ausgegebenen digitalen Daten mit einem Empfänger-Referenzsignal, ausgebildet zum Bestimmen einer messung für die Ankunftsrichtung für jedes erfasste GNSS-Signal mittels eines Lenkvektors, der für jede Elevation und jeden Azimut ausgewertet wird, um die Hemisphäre abzudecken, und ausgebildet zum Detektieren eines Spoofing-Störers aus der ermittelten Messung der Ankunftsrichtung und **gekennzeichnet dadurch**, ferner ausgebildet zu sein zum Lokalisieren eines Spoofing-Störers durch Bestimmen der Entfernung zwischen der Gruppenantenne und dem Spoofing-Störer aus einem erfassten GNSS-Signal, das als von dem Spoofing-Störer übertragen detektiert wird, mittels einer Codesynchronisation des Empfänger-Referenzsignals mit dem erfassten GNSS-Signal von dem Spoofing-Störer.

**10.** Vorrichtung nach Anspruch 9, wobei die ersten Mittel umfassen

- eine Gruppenantenne (10) mit N Antennenelementen und
- Front-End-Schaltungsanordnung mit einer HF-Front-End-Schaltungsanordnung (12) zur Abwärtskonvertierung empfangener Funksignale in einem Basisband und einer digitalen Front-End-Schaltungsanordnung (14) zur Digitalisierung der abwärtskonvertierten empfangenen Funksignale, wobei die Front-End-Schaltungsanordnung (12, 14) und die Gruppenantenne (10) N Empfängerketten bilden.

**11.** Vorrichtung nach Anspruch 10, wobei die zweiten Mittel (16, 18, 20) ein oder mehrere Verarbeitungsmittel umfassen, die konfiguriert sind, die Verfahrenshandlungen nach Anspruch 2, 3 und/oder 4 auszuführen.

**12.** Vorrichtung nach Anspruch 11, wobei die zweiten Mittel (16, 18, 20) umfassen

- einen Matrix-Prozessor zur Durchführung der Verfahrenshandlungen nach Anspruch 2,
- einen Prozessor zur Bestimmung einer Störer-Richtungsankunft-Bestimmung zur Durchführung der Handlungen der Ansprüche 3 und 4.

**13.** Computerprogramm, welches, wenn es auf einem Prozessor nach einem der Ansprüche 9 bis 11 ausgeführt wird, die Vorrichtungen dazu veranlasst, die entsprechenden Verfahren nach Ansprüchen 1 bis 8 auszuführen.

**14.** Ein Speicherträger zum Speichern des Computerprogramms nach Anspruch 13.

**Revendications**

**1.** Procédé de détection d'un brouilleur intentionnel de mystification pour des signaux GNSS, les signaux GNSS disponibles dans une position de réception étant connus et le procédé comprenant les actions suivantes :

- recevoir des signaux radio en provenance d'un GNSS au moyen d'une antenne en réseau (10) ayant N éléments d'antennes et des circuits frontaux (12, 14) formant N chaînes de récepteurs, chacun délivrant des données numériques des signaux radio reçus,
- acquérir grossièrement (16, 18) des signaux GNSS contenus dans les signaux radio reçus par traitement des données numériques délivrées à l'aide du signal de référence de récepteur,
- déterminer (20, 22, 24, 26) une mesure de la direction d'arrivée pour chaque signal GNSS acquis au moyen d'un vecteur de guidage évalué pour chaque élévation et azimut afin de couvrir l'hémisphère,
- détecter (2à, 22, 24, 26) un brouilleur intentionnel de mystification à partir de la mesure déterminée de la direction d'arrivée, et **caractérisé en outre par** l'étape consistant à :
- localiser un brouilleur intentionnel de mystification par détermination de la distance entre l'antenne en réseau et le brouilleur intentionnel de mystification à partir d'un signal GNSS acquis détecté alors qu'il est transmis à partir du brouilleur intentionnel de mystification au moyen d'une synchronisation de code du signal de référence de récepteur avec le signal GNSS acquis à partir du brouilleur intentionnel de mystification.

2. Procédé selon la revendication 1, l'acquisition grossière consistant à :

- générer pour chaque chaîne de récepteur n échantillons équivalent à la longueur de code du signal de référence de récepteur multiplié par une fréquence d'échantillonnage de récepteur,
- générer une matrice $M$ comprenant pour chaque chaîne de récepteur une rangée avec n échantillons générés de la chaîne de récepteur respectif,
- générer un vecteur $\underline{x}$ du signal de référence de récepteur,
- calculer une matrice de récepteur d'acquisition grossière $R = \underline{x}^H M^t$, $H$ indiquant la transposée hermitienne et $^t$indiquant la transposée.

3. Procédé selon la revendication 2, la détermination d'une mesure de la direction d'arrivée pour chaque signal GNSS acquis consistant à calculer la mesure $\Psi$ par multiplication de la matrice de récepteur d'acquisition grossière $R$ avec le vecteur de guidage $A$.

4. Procédé selon la revendication 3, la détection d'un brouilleur intentionnel de mystification à partir de la mesure déterminée de la direction d'arrivée consistant à

- déterminer à partir de la mesure $\Psi$ l'élévation et l'azimut de chaque signal GNSS acquis, et
- détecter un brouilleur intentionnel de mystification en tant que source d'un signal GNSS acquis par comparaison de l'élévation déterminée et l'azimut du signal GNSS acquis avec l'almanach du satellite GNSS servant à transmettre le signal GNSS acquis.

5. Procédé selon l'une quelconque des revendications précédentes, l'acquisition grossière étant appliquée à la somme de données de composantes en quadrature et de composantes en phase collectées et sommées à partir des données numériques fournies par toutes les chaînes de récepteur.

6. Procédé selon l'une quelconque des revendications précédentes, l'acquisition grossière étant directement appliquée aux données numériques fournies à partir d'au moins deux chaînes de récepteur.

7. Procédé selon l'une quelconque des revendications précédentes, les signaux GNSS disponibles dans la position de réception étant obtenus par l'intermédiaire de données de l'almanach et/ou des éphémérides.

8. Procédé selon l'une quelconque des revendications précédentes, étant traité soit en parallèle soit séquentiellement pour détecter et localiser plusieurs brouilleurs intentionnels de mystification.

9. Dispositif de détection d'un brouilleur intentionnel de mystification pour des signaux GNSS, les signaux GNSS disponibles dans une position de réception étant connus et le dispositif comprenant

- des premiers moyens (10, 12, 14) conçus pour recevoir des signaux radio partir d'un GNSS et pour fournir des données numériques des signaux radio reçus, et
- des seconds moyens (16, 18, 20) conçus pour acquérir grossièrement des signaux GNSS contenus dans les signaux radio reçus par traitement des données numériques fournis avec un signal de référence de récepteur, conçus pour déterminer une mesure de la direction d'arrivée pour chaque signal GNSS acquis au moyen d'un vecteur de guidage évalué pour chaque élévation et azimut afin de couvrir l'hémisphère, et conçus pour détecter un brouilleur intentionnel de mystification à partir de la mesure déterminée de la direction d'arrivée et **caractérisé en ce qu'**il est conçu en outre pour localiser un brouilleur intentionnel de mystification par détermination de la distance entre l'antenne en réseau et le brouilleur intentionnel de mystification à partir du signal GNSS acquis détecté alors qu'il est transmis à partir du brouilleur intentionnel de mystification au moyen d'un synchronisation de code du signal de référence de récepteur avec le signal GNSS acquis à partir du brouilleur intentionnel de mystification.

10. Dispositif selon la revendication 9, le premier moyen comprenant

- une antenne en réseau (10) avec n éléments d'antenne et
- des circuits frontaux comprenant des circuits frontaux RF (12) pour convertir à la baisse des signaux radio reçus dans une bande de base et des circuits frontaux numériques (14) pour numériser des signaux radio reçus convertis à la baisse, les circuits frontaux (12, 14) et l'antenne en réseau (10) formant N chaînes de récepteurs.

11. Dispositif selon la revendication 10,
les seconds moyens (16, 18, 20) comprenant un ou plusieurs moyens de traitement étant conçus pour exécuter le procédé selon la revendication 2, 3 et/ou 4.

12. Dispositif selon la revendication 11,
les seconds moyens (16, 18, 20) comprenant
un processeur de matrice pour exécuter le procédé selon la revendication 2, une direction de brouilleur du processeur de détermination d'arrivée pour exécuter les revendications 3 et 4.

13. Programme informatique, qui, lorsqu'il est exécuté sur un processeur de quelconques dispositifs selon les revendications 9 à 11, amène les dispositifs à exécuter les procédés correspondants selon les revendications 1 à 8.

14. Support d'enregistrement mémorisant le programme informatique selon la revendication 13.

Fig. 1

EP 2 796 895 B1

Fig. 2

Fig. 3

Fig. 4

Fig. 5

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7250903 B1

### Non-patent literature cited in the description

- **S. PULLEN ; G. GAO.** *GNSS Jamming in the Name of Privacy Potential Threat to GPS Aviation, http://www.insidegnss.com*
- **B. LEDVINA ; P. MONTGOMERY ; T. HUMPHREYS.** *A Multi-Antenna Defense: Receiver-Autonomous GPS Spoofing Detection, http://www.insidegnss.com*
- Field Test: Jamming the DLR Adaptive Antenna Receiver. **CUNTZ M et al.** GNSS 2011 - PROCEEDINGS OF THE 24TH INTERNATIONAL TECHNICAL MEETING OF THE SATELLITE DIVISION OF THE INSTITUTE OF NAVIGATION (ION GNSS 2011). THE INSTITUTE OF NAVIGATION, 23 September 2011, 384
- Who's Afraid of the Spoofer? GPS/GNSS Spoofing Detection via Automatic Gain Control. **AKOS et al.** NAVIGATION. INSTITUTE OF NAVIGATION, 01 December 2012, vol. 59, 281-290